# EUROPÄISCHE PATENTANMELDUNG

(11) **EP 2 896 752 A1**
(43) Veröffentlichungstag der Anmeldung: **22.07.2015**
(21) Anmeldenummer: 14196867.7
(22) Anmeldetag: 09.12.2014
(51) Int. Cl.: E02F 5/10, E02F 5/14, F16L 1/028, H02G 1/06

(54) **Verfahren und System zum Verlegen von vor mechanischen Beanspruchungen geschützten Leitungen**

(30) Priorität: 17.01.2014 DE 102014100490
(71) Anmelder: IFK Gesellschaft m.b.H., 5020 Salzburg (AT)
(72) Erfinder: Knapp, Eduard, 5300 Hallwang (AT)
(74) Vertreter: Manitz, Finsterwald & Partner GbR

(57) **Zusammenfassung**

Die vorliegende Erfindung betrifft ein Verfahren zum Verlegen von Leitungen (22) im Erdreich (E), bei dem unter Verwendung eines Pflugschwerts (16) ein Verlegeschlitz (38) im Erdreich (E) zur Aufnahme der zu verlegenden Leitung (22) erzeugt wird, bevor anschließend die Leitung (22) in den Verlegeschlitz (38) mittels eines in den Verlegeschlitz (38) hineinragenden Einführelements (18) eingebracht wird. Hierbei wird zusammen mit dem Einbringen der Leitungen (22) in den Verlegeschlitz (38) eine Schutzlage (102) derart in das Erdreich (E) eingebracht, dass sie oberhalb der Leitung (22) zu liegen kommt, so dass die Leitung (22) vor mechanischen Beanspruchungen von oben geschützt ist.

## Beschreibung

Die vorliegende Erfindung betrifft ein Verfahren zum Verlegen von Leitungen im Erdreich, welches derart ausgestaltet ist, dass die Leitungen danach vor mechanischen Beanspruchungen geschützt sind. Ferner betrifft die Erfindung ein System, mit dem sich Leitungen im Erdreich so verlegen lassen, dass sie vor mechanischen Beanspruchungen geschützt sind.

Ein gattungsgemäßes Verfahren und ein gattungsgemäßes System sind beispielsweise aus der DE 10 2007 043 647 A1 bekannt geworden.

Sofern im Rahmen der vorliegenden Erfindung von Leitungen die Rede ist, so sind hierrunter Rohre, wie beispielsweise Abwasserleitungen mit Sohlgefälle und/oder elektrische Leitungskabel wie beispielsweise Starkstromkabel und insbesondere Starkstromkabel mit einer Spannungsfestigkeit von 110 bis 380 kV und mehr zu verstehen.

Da Leitungen üblicherweise unter Flur verlegt werden, ist es im Rahmen der Leitungsverlegung meist erforderlich, zunächst beispielsweise mit einem Bagger entlang der geplanten Leitungstrasse einen Graben auszuheben, in welchen anschließend die Leitung eingebracht bzw. verlegt wird. Abschließend muss dann der Graben mit dem zuvor entfernten Aushubmaterial wieder verschlossen werden. Diese herkömmliche offene Bauweise ist jedoch verhältnismäßig arbeitsintensiv und daher in wirtschaftlicher Hinsicht nur wenig rentabel. Außerdem verursacht dieses konventionelle Verfahren einen Flurschaden, welcher ökologisch bedenklich sein kann.

Ein wirtschaftlicheres und umweltschonenderes Verfahren zum Verlegen von Leitungen stellt das sogenannte Pflügeverfahren dar. Bei diesem Verfahren wird mit Hilfe eines sogenannten Verlegepflugs ein schmaler grabenartiger Schlitz im Erdreich erzeugt, wobei während der Herstellung des Schlitzes gleichzeitig eine oder mehrere Leitungen auf der Sohle des Schlitzes abgelegt werden. Zur Herstellung des Schlitzes weist dabei der Verlegepflug als Arbeitsorgan ein sogenanntes Pflugschwert auf, welches mit hohen Kräften das Erdreich auseinanderpresst, wenn sich der Verlegepflug entlang der geplanten Leitungstrasse bewegt. Um die Leitung dabei in den Schlitz einführen und auf dessen Sohle ablegen zu können, ist dem Pflugschwert ein Einführelement nachgeordnet und mit dem Pflugschwert gekoppelt, welches zusammen mit dem Pflugschwert von dem Verlegepflug durch den von dem Pflugschwert unmittelbar zuvor erzeugten Schlitz gezogen wird. Während sich der Verlegepflug entlang der geplanten Leitungstrasse bewegt, wird dabei gleichzeitig die Leitung durch das Einführelement in den Schlitz eingeführt und auf dessen Sohle abgelegt. Nach dem Verlegevorgang schließt sich der Verlegeschlitz wieder selbsttätig ohne weiteres Zutun, da das zuvor aufgepflügte Erdmaterial von selbst wieder zurück in den Verlegeschlitz fällt und/oder durch Niederschläge zurück in den Schlitz gespült wird.

Bei einem anderen als Torpedo- oder Raketenzugverfahren bekannten Pflügeverfahren wird ebenfalls mit einem Pflugschwert ein Schlitz im Erdreich erzeugt, wobei die einzupflügende Leitung von einem als Einführelement dienenden Aufweitkörper, welcher hinter dem Pflugschwert durch den zuvor erzeugten Schlitz gezogen wird, in den Schlitz eingezogen wird. Die Leitung wird somit über die gesamte Länge des erzeugten Schlitzes hinweg von einem Startpunkt aus in den Schlitz ein- und durch denselben hindurch durch das Erdreich gezogen.

Im Unterschied zur offenen Bauweise wird bei den beschriebenen Pflügeverfahren somit kein Graben vorab erzeugt, in den dann die zu verlegende Leitung eingebracht wird und welcher danach dann sukzessive mit Erdreich wieder verfüllt wird, was im Rahmen der offenen Bauweise die Möglichkeit eröffnet, oberhalb der Leitung zum Schutz derselben vor mechanischen Beanspruchungen eine Schutzlage in den wieder teilweise verfüllten Graben einzubringen. Derartige Schutzlagen in Form von Leitungsabdeckplatten können erforderlich werden, um die Leitung vor Beschädigungen zu schützen, wie sie beispielsweise während späterer Baumaßnahmen auftreten können, wenn beispielsweise in der Nähe der verlegten Leitung mit einem Bagger Aushubmaßnahmen durchgeführt werden, infolge derer beispielsweise die Gefahr besteht, dass die Leitung von der Baggerschaufel während der Aushubmaßnahme beschädigt wird.

Der Erfindung liegt daher die Aufgabe zugrunde, zumindest eine Realisierung anzugeben, mit der sich Leitungen im Erdreich unter Verwendung eines Pflügeverfahrens so verlegen lassen, dass die Leitung danach vor mechanischen Beanspruchungen geschützt ist.

Diese Aufgabe wird gemäß einem ersten Aspekt der Erfindung durch ein Verfahren zum Verlegen von Leitungen im Erdreich mit den Merkmalen des Anspruchs 1 und insbesondere dadurch gelöst, dass zusammen mit dem Einbringen der Leitung in den Verlegeschlitz eine Schutzlage derart in das Erdreich eingebracht wird, dass sie oberhalb der Leitung zu liegen kommt und zwar vorzugsweise ca. 25 bis 35 cm und besonders bevorzugt ca. 30 cm oberhalb der verlegten Leitung.

Gemäß einem zweiten Aspekt wird die der Erfindung zugrundeliegende Aufgabe durch ein System zum Verlegen von Leitungen im Erdreich mit den Merkmalen des Anspruchs 10 und insbesondere dadurch gelöst, dass an dem Einführelement eine Koppelvorrichtung angebracht ist, über die eine oberhalb der Leitung im Erdreich zu liegen kommende Schutzlage mit dem Einführelement gekoppelt werden kann.

Im Unterschied zu der herkömmlichen Leitungsverlegung in der offenen Bauweise wird also erfindungsgemäß die Schutzlage nicht in einen bereits teilweise wieder verfüllten Graben eingebracht, auf dessen Sohle zuvor eine Leitung verlegt bzw. abgelegt wurde; vielmehr wird erfindungsgemäß die Schutzlage während desselben Schritts wie die zu verlegende Leitung in das Erdreich bzw. in den Verlegeschlitz eingebracht, so dass in einem einzigen Arbeitsgang sowohl das Verlegen der Leitung als auch das Einbringen der Schutzlage in das Erdreich abgeschlossen ist. Insbesondere muss dabei nach erfolgter Leitungsverlegung nicht eigens zur Einbringung einer Schutzlage in das Erdreich ein entsprechender Graben zur Aufnahme der Schutzlage geschaffen werden, womit die Leitungsverlegung deutlich schneller und damit kostengünstiger vonstattengeht. Davon abgesehen ist die erfindungsgemäße Herangehensweise, bei der die zu verlegende Leitung und die Schutzlage gemeinsam in das Erdreich eingebracht werden, auch sicherer, da nach dem Verlegen der Leitung im Pflügeverfahren nicht noch einmal extra ein Graben zur Verlegung der Schutzlage erzeugt werden muss, da auch hierbei bereits die Gefahr besteht, dass die bereits verlegte Leitung durch beispielsweise eine Baggerschaufel beschädigt wird.

Vorteilhafte Ausführungsformen der Erfindung ergeben sich aus den Unteransprüchen, der Beschreibung sowie den Zeichnungen.

Im Folgenden wird zunächst auf spezielle Ausführungsformen des erfindungsgemäßen Verfahrens eingegangen, deren Aspekte sich jedoch in entsprechender Weise auf das erfindungsgemäße System übertragen lassen.

So ist es gemäß einer ersten Ausführungsform des Verfahrens vorgesehen, dass die Schutzlage beginnend von einem Startpunkt aus hinter dem Einführelement hinterher in das Erdreich ein- und durch dasselbe hindurchgezogen wird. Ähnlich wie dies beim Torpedo- oder Raketenpflugverfahren der Fall ist, wird also die Schutzlage mit dem Einführelement gekoppelt, so dass sie mittels des Einführelements in das Erdreich eingeführt und durch dasselbe hindurchgezogen wird, wenn der Verlegepflug entlang der geplanten Leitungssolltrasse entlang gezogen wird. Es wird somit keine gesonderte Vorrichtung erforderlich, um die Schutzlage in das Erdreich einzupflügen; vielmehr bedient sich die Erfindung des ohnehin in den Verlegeschlitz hineinragenden Einführelements, um mit diesem die Schutzlage oberhalb der eingefügten Leitung in das Erdreich einzubringen.

Gemäß einer weiteren Ausführungsform kann hierzu die Schutzlage mittelbar mit dem in den Verlegeschlitz hineinragenden Einführelement gekoppelt werden, indem beispielsweise eine Koppelvorrichtung mit einem Kraftsensor zwischen das Einführelement und die Schutzlage zwischengeschaltet wird, worauf nachfolgend noch genauer eingegangen wird. Die Koppelvorrichtung ermöglicht in diesem Falle nicht nur die Anbringung der Schutzlage an dem ohnehin in das Erdreich hineinragenden Einführelement; vielmehr können mit dieser Koppelvorrichtung bzw. deren Kraftsensor die in der Schutzlage herrschenden Zugkräfte ermittelt werden, die aufgrund der Reibung zwischen dem Erdreich und der Schutzlage zunehmen, wenn die Schutzlage mit fortschreitender Leitungsverlegung im Erdreich hinter dem Einführelement hinterhergezogen wird. Sollte hierbei festgestellt werden, dass die in der Schutzlage herrschenden Zugkräfte eine maximal zulässige Zugkraft überschreiten sollten, kann dann die Schutzlage von dem Einführelement getrennt werden, so dass von einem neuen Startpunkt aus damit fortgefahren werden kann, einen weiteren Abschnitt der Schutzlage mit Hilfe des Einführelements in das Erdreich ein- und durch dasselbe hindurchzuziehen.

Um die in der Schutzlage während der Leitungsverlegung herrschenden Zugkräfte reduzieren zu können, ist es gemäß einer weiteren Ausführungsform vorgesehen, dass die Schutzlage auf einer Trommel aufgewickelt ist, von der sie mit zunehmender Entfernung des Einführelements von der Trommel während der Leitungsverlegung abgewickelt wird. Im Unterschied zu verhältnismäßig starren Kabelabdeckplatten handelt es sich somit bei der Schutzlage um eine flexible Materiallage, die trotz ihrer Flexibilität hinreichend robust und widerstandsfähig ist, um mechanischen Beschädigungen beispielsweise durch eine Baggerschaufel widerstehen zu können.

Gemäß einer weiteren Ausführungsform ist es vorgesehen, dass während des Einbringens der Leitung in den Verlegeschlitz Leitungspositionsdaten entlang der eingebrachten Leitung ermittelt werden, was vorzugsweise durch wiederholtes Vermessen eines sich mit dem Einführelement mitbewegenden und für die Verlegetiefe der Leitung repräsentativen Punkts erfolgen kann, welcher in vertikaler Richtung einen definierbaren konstanten Sollabstand zu einer auf der Sohle des Verlegeschlitzes aufstehenden Unterseite des Einführelements aufweist.

Sofern im Rahmen der vorliegenden Erfindung von Leitungs- oder Geländepositionsdaten die Rede ist, so sind hierunter ganz allgemein geodätische Informationen zu verstehen, anhand derer ein Punkt im Raum bestimmt werden kann. Da herkömmliche Vermessungsgeräte, wie beispielsweise Tachymeter nicht in der Lage sind, absolute Koordinaten in Bezug auf ein feststehendes Bezugssystem direkt zu ermitteln, sondern lediglich zur Vermessung von Winkeln und Entfernungen dienen, kann es sich bei diesen Positionsdaten daher beispielsweise um geodätische Winkel- oder Entfernungsinformationen handeln, anhand derer aus einem zuvor vermessenen Punkt auf die Position eines Folgepunkts geschlossen werden kann. Bei den (Leitungs-)Positionsdaten handelt es sich somit entweder um absolute, also auf ein festes Bezugssystem bezogene geodätische Daten, oder um relative, also auf einen zuvor vermessenen Punkt bezogene geodätische Daten. Werden derartige Positionsdaten umgerechnet, um einen Punkt im Raum in Bezug auf ein festes Bezugs- bzw. Koordinatensystem bestimmen zu können, so werden hierunter dann Leitungs- bzw. Geländekoordinaten verstanden.

Zwar kann grundsätzlich jede Einrichtung zur Ermittlung der Leitungspositionsdaten einer eingefügten Leitung verwendet werden, welche zur Vermessung des für die Verlegetiefe der Leitung repräsentativen mit dem Einführelement gekoppelten Punkts geeignet ist. Es kann sich jedoch als vorteilhaft erweisen, zur Ermittlung der Leitungspositionsdaten die Position des sich mit dem Einführelement mitbewegenden Punkts durch GPS-Vermessung unter Verwendung eines GPS-Verarbeitungsmoduls zu bestimmen, das mit einer GPS-Antenne gekoppelt ist, die an dem für die Verlegetiefe repräsentativen Punkt angeordnet wurde. Die Positionsbestimmungen mittels GPS-Vermessung erweist sich dabei als vorteilhaft, da zur Bestimmung der Lage der Leitung in der Ebene keine aufwendigen Vermessungsarbeiten beispielsweise unter Verwendung von Maßbändern erforderlich werden, und insbesondere durch die Verwendung einer selbsttätigen Totalstation mit automatischer Zielverfolgung oder eines GPS-Vermessungsverfahrens kann somit ein kontinuierlicher Verlegefortschritt erzielt werden. Vor allem bietet jedoch die GPS-Vermessung den Vorteil, dass keinerlei Justierungs- und Kalibrierungsmaßnahmen durchgeführt werden müssen, da das GPS-Verarbeitungsmodul jederzeit und an jedem Ort die empfangenen GPS-Signale direkt verarbeiten kann, wodurch das Verfahren besonders effizient wird.

Wie bereits zuvor erwähnt wurde, können bei dem erfindungsgemäßen Verfahren während des Einbringens der Schutzlage in das Erdreich die darin herrschenden Zugkräfte ermittelt werden. Um beispielsweise einem etwaigen Auftraggeber zu Zwecken der Qualitätssicherung und -überwachung einen Nachweis darüber erbringen zu können, dass während der Leitungs- und Schutzlagenverlegung die maximal zulässigen Zugspannungen in der Schutzlage nicht überschritten wurden und insbesondere die Schutzlage während ihrer Verlegung nicht gerissen ist, kann es daher gemäß einer weiteren Ausführungsform vorgesehen sein, sich die ermittelten Leitungspositionsdaten zu Dokumentationszwecken dahingehend zunutze zu machen, dass die ermittelten Zugkräfte und/oder die ermittelten Leitungskoordinaten in Abhängigkeit von den Lagekoordinaten der Leitungssolltrasse in einer Protokolldatei abgespeichert werden. Die in der Protokolldatei abgespeicherten Informationen können dann zu einem späteren Zeitpunkt wieder abgerufen werden, um tabellarisch und/oder graphisch visualisiert zu werden. Hierdurch kann eine Dokumentation über den tatsächlichen Verlauf der verlegten Leitung sowie über die in der Schutzlage herrschenden Zugkräfte zur Verfügung gestellt werden, mit Hilfe derer sich ein Nachweis über die ordnungsgemäß Leitungs- und Schutzlagenverlegung erbringen lässt.

Im Folgenden wird nun auf bevorzugte Ausführungsformen des erfindungsgemäßen Systems eingegangen, mit dem sich Leitungen im Erdreich so verlegen lassen, dass diese vor mechanischen Beanspruchungen geschützt sind.

So ist gemäß einer bevorzugten Ausführungsform eine Koppelvorrichtung vorgesehen, die an dem Einführelement anbringbar oder angebracht ist und ausgebildet ist, um darüber eine oberhalb der Leitung im Erdreich zu liegen kommende Schutzlage mit dem Einführelement zu koppeln. Insbesondere ist die Koppelvorrichtung oberhalb jenes Punktes an dem Einführelement anbringbar oder angebracht, an dem die zu verlegende Leitung aus dem Einführelement austritt bzw. daran befestigt ist, um so zu gewährleisten, dass die Schutzlage oberhalb der verlegten Leitung im Erdreich zu liegen kommt. Beispielsweise kann die Koppelvorrichtung eine Klemmeinheit aufweisen, mit der die Schutzlage an der Koppelvorrichtung festgeklemmt werden kann. Alternativ oder zusätzlich hierzu wäre es ebenfalls möglich, dass die Koppelvorrichtung über eine Formschlusseinheit verfügt, mittels derer sich die Schutzlage formschlüssig mit der Koppelvorrichtung in Eingriff bringen lässt, um so die Schutzlage mit nur wenigen Handgriffen von dem Einführelement bzw. der Koppelvorrichtung entfernen bzw. daran befestigen zu können.

Gemäß noch einer weiteren Ausführungsform weist die Koppelvorrichtung in der bereits zuvor erläuterten Art und Weise einen Kraftsensor auf, welcher eingerichtet ist, um damit die Zugkräfte während des Einbringens der Schutzlage in das Erdreich ermitteln zu können, die in der Schutzlage infolge des Einbringens derselben in das Erdreich herrschen. Bei dem Kraftsensor kann es sich beispielsweise um eine Kraftmessdose handeln, deren Messsignale dann von einer Auswerteeinheit in für die jeweiligen Zugkräfte repräsentativen Daten umgerechnet werden können, welche dann von einer Speichereinrichtung in Abhängigkeit der Lagekoordinaten der Leitungssolltrasse abgespeichert werden können.

Da die Schutzlage eine größere Breite als das Einführelement aufweist und somit nicht vollständig im Schutze des Einführelements hinter demselben im Erdreich hinterhergezogen wird, ist es gemäß einer weiteren Ausführungsform vorgesehen, dass die Koppelvorrichtung ein Verdrängungselement aufweist, das in Verlegerichtung das Erdreich vor der Schutzlage verdrängt. Das auf diese Weise verdrängte Erdreich steht somit nicht über Reibung mit der einzuziehenden Schutzlage in Eingriff, wodurch die in der Schutzlage herrschenden Zugkräfte zugunsten längerer Einzugsabschnitte reduziert werden.

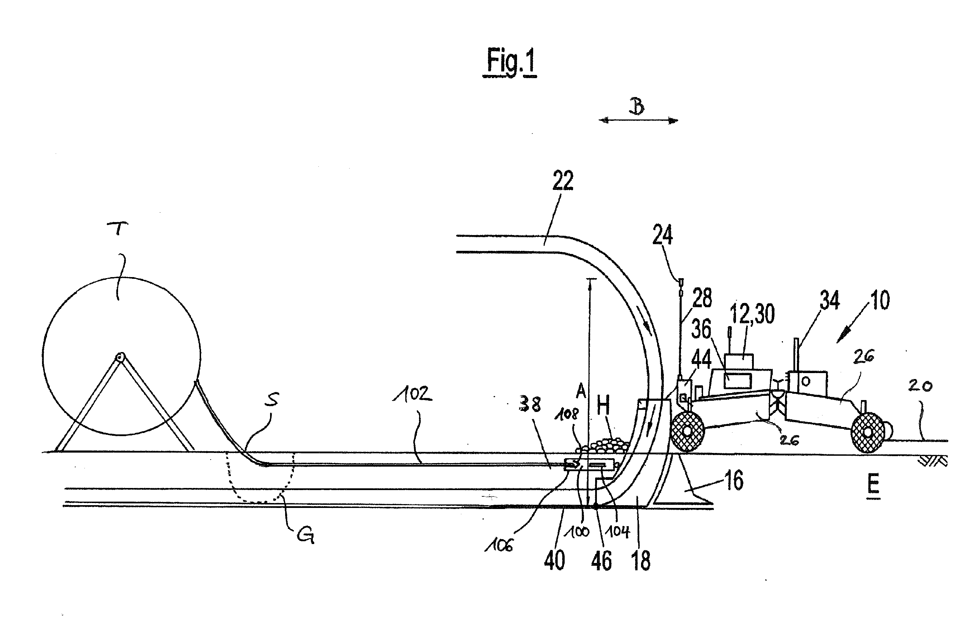

Im Folgenden wird nun die Erfindung rein exemplarisch anhand einer beispielhaften Ausführungsform unter Bezugnahme auf die
- Fig. 1: erläutert, die eine schematische Darstellung des erfindungsgemäßen Systems zum geschützten Verlegen von Leitungen im Erdreich zeigt.

Zunächst wird im Folgenden unter Bezugnahme auf die Fig. 1 das Pflügeverfahren an sich zur Verlegung von Leitungen beschrieben. Bei dem Verfahren wird mit Hilfe eines Verlegepflugfahrzeugs 10 bzw. eines mit dem Verlegepflugfahrzeug 10 gekoppelten Arbeitsorgans 16, 18 im Erdreich E ein Verlegeschlitz 38 erzeugt, wobei während der Herstellung des Verlegeschlitzes 38 gleichzeitig eine oder mehrere Leitungen 22 auf der Sohle 40 des Verlegeschlitzes 38 abgelegt werden. Das Verlegepflugfahrzeug 10 ist dabei über ein Seil 20 mit einem hier nicht gezeigten Zugfahrzeug verbunden, welches das Verlegepflugfahrzeug 10 entlang der geplanten Leitungstrasse zieht. Das Verlegepflugfahrzeug 10 besteht im Wesentlichen aus einem Fahrgestellt, an dem vier Auslegerarme 26 auskragend angebracht sind, an deren freien Enden sich jeweils ein Rad befindet. Die Auslegerarme 26 sind an dem Fahrgestell angelenkt, um im Falle des Vorhandenseins von Hindernis verschwenkt werden zu können.

Zur Herstellung des Verlegeschlitzes 38 umfasst das Arbeitsorgan 16, 18 des Verlegepflugfahrzeugs 10 ein vorauseilendes Pflugschwert 16, welches mit hohen Kräften das Erdreich E auseinanderpresst, wenn das Verlegepflugfahrzeug 10 entlang der geplanten Leitungstrasse gezogen wird. Dem Pflugschwert 16 ist ein damit gekoppeltes Einführelement 18 nachgeordnet, welches zusammen mit dem Pflugschwert 16 durch den erzeugten Schlitz 38 gezogen wird. Das Einführelement 18 fungiert dabei gewissermaßen als Einführtrichter, um die Leitung 22 in den kurz zuvor von dem Pflugschwert 16 erzeugten Verlegeschlitz einführen und auf dessen Sohle 40 ablegen zu können. Entgegen der dargestellten Ausführungsform kann dabei die Leitung von einer Trommel abgewickelt werden, welche von dem Verlegepflugfahrzeug 10 getragen wird.

Wie der Darstellung der Fig. 1 entnommen werden kann, entsteht direkt im Bereich des Arbeitsorgans 16, 18 bedingt durch den Pflügevorgang eine Erdanhäufung H, weshalb anhand des reinen Überstands des Einführelements 18 über das Erdreich E nicht zuverlässig auf die Verlegetiefe in Bezug auf die ursprüngliche Geländeoberfläche geschlossen werden kann.

Um diesem Problem Rechnung zu tragen, wird während des Einführens der Leitung 22 in den Verlegeschlitze 38 wiederholt ein sich mit dem Einführelement 18 mitbewegender und für die Verlegetiefe der Leitung 22 repräsentative Punkt vermessen, welcher in vertikaler Richtung einen definierten, konstanten Abstand A zu einer auf der Sohle 40 des Verlegeschlitzes 38 aufstehenden Unterseite des Einführelements 18 aufweist. Unter Verwendung der auf diese Weise entlang der eingepflügten Leitung 22 erhaltenen Leitungspositionsdaten kann dann grundsätzlich auf die vorhandene Verlegetiefe und/oder die Lage der Leitung 22 in der Geländeebene geschlossen werden.

Bei der dargestellten Ausführungsform ist zur Bestimmung der Leitungspositionsdaten mit dem Einführelement 18 ein Empfangselement 24 in Form einer GPS-Antenne gekoppelt, welche sich an dem für die Verlegetiefe der Leitung 22 repräsentativen Punkt befindet, der in vertikaler Richtung einen definierten, konstanten Abstand A zu der auf der Sohle 40 des Verlegeschlitzes 38 aufstehenden Unterseite des Einführelements 18 aufweist. Wie der Fig. 1 entnommen werden kann, ist die GPS-Antenne 24 dabei über einen Stab 28 an einem Tragkörper 44 befestigt, welcher mit dem Einführelement 18 derart gekoppelt ist, dass der für die Verlegetiefe repräsentative Punkt, an welchem sich die GPS-Antenne 24 befindet, in sowohl vertikaler als auch in horizontaler Richtung jeweils einen konstanten und vorbestimmten Abstand A, B zu der Stelle 46 an der Unterseite des Einführelements 18 aufweist, welcher auf der Sohle 40 des Verlegeschlitzes 38 aufsteht. Anstelle die GPS-Antenne 24 über den Stab 28 an dem Tragkörper 24 zu befestigen, wäre es jedoch ebenfalls möglich, die GPS-Antenne 24 über den Stab 28 direkt an dem Einführelement 18 oder an dem Pflugschwert 16 anzubringen, solange gewährleistet ist, dass die GPS-Antenne 24 zum Empfang von GPSSignalen durch keine störenden Hindernisse verdeckt wird.

Zur Erfassung der Leitungspositionsdaten weist das erfindungsgemäße System ferner eine Einrichtung 12 auf, mit der sich während des Einführens der Leitung 22 in den Verlegeschlitz 38 kontinuierlich Positionsänderungen der GPS-Antenne 24 erfassen lassen. Bei dieser Erfassungseinrichtung 12 handelt es sich in der dargestellten Ausführungsform um ein GPS-Verarbeitungsmodul 12, das kontinuierlich die Position der GPS-Antenne 24 berechnet, indem es die von der GPS-Antenne 24 empfangenen GPS-Signale in entsprechende Koordinaten umrechnet. Die Funktionalität des GPS- Verarbeitungsmodus 12 wird in der dargestellten Ausführungsform von einer Auswerteeinheit in Form eines Mikroprozessors wahrgenommen, welcher programmtechnisch derart eingerichtet ist, dass er auf Grundlage der von der GPS-Antenne 24 erfassten GPS-Signale die Höhenlage der eingefügten Leitungen 22 in Abhängigkeit von deren Lagekoordinaten in der Ebene bestimmen kann.

Die auf diese Weise erhaltenen Koordinaten der verlegten Leitung 22 können nun beispielsweise auf einem im Führerstand des Verlegepflugfahrzeugs 10 befindlichen Anzeigebildschirm 34 angezeigt werden. Auf diese Weise kann eine Bedienperson des Verlegepflugfahrzeugs 10 durch kontinuierliches Vergleichen der Koordinaten der Leitungssolltrasse mit den Ist-Koordinaten der verlegten Leitung 22 auf eine etwaige Fehllage schließen, um anschließend bei Bedarf auf den Verlegevorgang Einfluss zu nehmen, indem sie beispielsweise eine etwaige zu geringe Verlegetiefe oder eine Abweichung der Leitung 22 von der Solltrasse korrigiert.

Nachdem voranstehend ausführlich die Ausgestaltung des Verlegepflugfahrzeugs 10 und das damit durchführbare Verfahren zum überwachten Verlegen von Leitungen 22 im Erdreich erläutert wurde, wird im Folgenden nun darauf eingegangen, wie in der erfindungsgemäßen Art und Weise eine Schutzlage 102 unter Verwendung des Verlegepflugfahrzeugs 10 in den Verlegeschlitz 38 eingebracht werden kann, so dass nach erfolgtem Verlegevorgang der Leitung 22 selbige vor mechanischen Beanspruchungen von außen geschützt ist.

So ist es erfindungsgemäß vorgesehen, dass an dem im Erdreich E befindlichen Abschnitt des Einführelements 18 eine Koppelvorrichtung 100 angebracht ist, über die eine die Leitung 22 schützende Schutzlage 102, die nach erfolgter Verlegung der Leitung 22 im Erdreich oberhalb derselben zu liegen kommen soll, mit dem Einführelement 18 gekoppelt ist. Bei der Schutzlage 102 handelt es sich um eine flexible Materiallage, die trotz ihrer Flexibilität hinreichend robust und widerstandsfähig ist, um mechanischen Beschädigungen beispielsweise durch eine Baggerschaufel widerstehen zu können. Wie dargestellt, ist die Schutzlage 102 im Ausgangszustand auf einer Trommel T aufgewickelt, von der sie mit fortschreitendem Verlegevorgang abgespult werden kann. Hierzu wird ein Anfangsabschnitt der Schutzlage 102 über die Koppelvorrichtung 100 mit dem Einführelement 18 verbunden, wozu beispielsweise im Bereich eines Startpunkts S im Erdreich E eine Startgrube G geschaffen werden kann, in die der Anfangsabschnitt der Schutzlage 102 in das Erdreich E eingeführt und dort mit der Koppelvorrichtung 100 verbunden werden kann. Hierzu weist die Koppelvorrichtung 100 beispielsweise eine Kupplungseinrichtung 106 in Form eines Klemmmechanismus auf, mit Hilfe dessen die Schutzlage 102 mit nur wenigen Handgriffen an der Koppelvorrichtung 100 und über diese an dem Einführelement 18 befestigt werden kann.

Nachdem die Schutzlage 102 auf diese Weise über die Koppelvorrichtung 100 an dem Einführelement 18 lösbar angebracht wurde, kann dann die Verlegung der Leitung 22 in der zuvor beschriebenen Art und Weise erfolgen, wobei jedoch erfindungsgemäß aufgrund der Kopplung der Schutzlage 102 mit dem Einführelement 18 mit fortschreitender Leitungsverlegung die Schutzlage 102 zusammen mit dem Einbringen der Leitung 22 in den Verlegeschlitz 38 derart eingezogen wird, dass sie oberhalb der Leitung 22 zu liegen kommt. Hierbei wird die Schutzlage 102 beginnend von dem Startpunkt S aus hinter dem Einführelement 18 hinterher in das Erdreich ein- und durch dasselbe hindurchgezogen, und zwar ähnlich wie dies ansonsten bei der Leitungsverlegung unter Verwendung des sogenannten Torpedo- oder Raketenpflugverfahrens der Fall ist.

Da mit fortschreitender Leitungsverlegung die Reibung zwischen der eingepflügten Schutzlage 102 und dem Erdreich E zunimmt, besteht die Möglichkeit, dass die in der Schutzlage 102 herrschenden Zugkräfte die maximal zulässigen Zugkräfte überschreiten, was dazu führen kann, dass die Schutzlage 102 reißt. Um dies zu verhindern, ist es erfindungsgemäß vorgesehen, dass die Zugkräfte, die in der Schutzlage 102 infolge des Einbringens derselben in das Erdreich E herrschen, während des Einbringens der Schutzlage 102 in das Erdreich E überwacht werden. Hierzu enthält die Koppelvorrichtung 100 einen Kraftsensor 104 wie beispielsweise eine Kraftmessdose, wobei dieser Kraftsensor 104 eingerichtet ist, um die in der Schutzlage 102 herrschenden Zugkräfte zu ermitteln. Die auf diese Weise ermittelten Zugkräfte können beispielsweise auf der Ausgabeeinrichtung 34 visualisiert und überwacht werden. Sollte dabei festgestellt werden, dass die in der Schutzlage 102 herrschenden Zugkräfte einen vorbestimmten Schwellwert überschreiten, kann dann die Schutzlage 102 von der Koppelvorrichtung 100 getrennt und anschließend ein neuer Anfangsabschnitt der Schutzlage 102 mit der Koppelvorrichtung 100 verbunden werden, um einen weiteren Abschnitt der Schutzlage 102 in das Erdreich E in der beschriebenen Weise einpflügen zu können.

Um die Reibung zwischen der Schutzlage und dem Erdreich und damit die in der Schutzlage 102 herrschenden Zugkräfte möglichst klein zu halten, weist die Koppelvorrichtung 100 in der dargestellten Ausführungsform ein Verdrängungselement 108 auf, das in Verlegerichtung das Erdreich E vor der Schutzlage 102 verdrängt. Durch das Verdrängungselement 108 wird unter anderem also etwaiges Erdreich, das zurück in den Verlegeschlitz 38 gefallen ist, verdrängt, so dass die Schutzlage 102 durch den mit Hilfe des Verdrängungselements 108 erzeugten Hohlraum im Erdreich E hinter der Koppelvorrichtung 100 hinterhergezogen werden kann. Der Körper des Verdrängungselements 108 erstreckt sich dabei über die gesamte Breite der Schutzlage 102, so dass durch den der Schutzlage 102 vorauseilenden Körper des Verdrängungselements 108 der Schutzlage 102 der Weg durch das Erdreich E freigemacht wird.

Da es wünschenswert sein kann, zu Zwecken der Qualitätssicherung und -überwachung zu dokumentieren, dass die maximal zulässigen Zugkräfte in der Schutzlage 102 nicht überschritten wurden und es insbesondere nicht zu einem Riss in der Schutzlage 102 gekommen ist, können die ermittelten Zugkräfte in Abhängigkeit von den Lagekoordinaten der Leitungssolltrasse in einer Protokolldatei unter Verwendung einer Speichereinrichtung abgespeichert werden. Da die Leitungspositionsdaten entsprechend den voranstehenden Erläuterungen im Rahmen der überwachten Verlegung der Leitung 22 ohnehin bereits ermittelt werden können, stehen somit die tatsächlichen Leitungskoordinaten sowie die Lagekoordinaten der Leitungssolltrasse bereits zur Verfügung, so dass die Zugkräfte ohne weiteren Zusatzaufwand in Abhängigkeit der Lagekoordinaten der Leitungssolltrasse und/oder der tatsächlich ermittelten Leitungskoordinaten in der Protokolldatei abgespeichert werden können, aus der sie zu einem späteren Zeitpunkt dann wieder ausgelesen werden können.

Die vorliegende Erfindung ermöglicht es somit, bereits zusammen mit dem Einbringen der Leitung 22 in den Verlegeschlitz 38 eine Schutzlage 102 derart in das Erdreich E einzubringen, dass sie oberhalb der Leitung 22 zu liegen kommt, um so die Leitung 22 vor etwaigen mechanischen Beanspruchungen, wie beispielsweise schädigenden Einflüssen durch beispielsweise eine Baggerschaufel zu schützen. Durch die Zugkraftüberwachung der in der Schutzlage 102 herrschenden Zugkräfte kann dabei zusätzlich sichergestellt werden, dass die Schutzlage 102 während des Einziehens und Hindurchziehens durch das Erdreich E nicht reißt, was so unter Verwendung der ohnehin zur Verfügung stehenden Leitungspositionsdaten dokumentiert werden kann, indem die ermittelten Zugkräfte in Abhängigkeit der Lagekoordinaten der Leitungssolltrasse abgespeichert werden.

### Bezugszeichenliste

- 10: Verlegepflugfahrzeug
- 12: Erfassungseinrichtung bzw. GPS-Verarbeitungsmodul
- 16: Pflugschwert
- 18: Einstellelement
- 20: Zugseil
- 22: Leitung
- 24: Empfangseinheit bzw. GPS-Antenne
- 26: Auslegerarme
- 28: Stab
- 30: Auswerteeinheit
- 34: Ausgabeeinrichtung
- 36: Steuereinrichtung
- 38: Verlegeschlitz
- 40: Sohle
- 44: Tragkörper
- 46: Aufstandspunkt von 18 auf 40
- 100: Koppelvorrichtung
- 102: Schutzlage
- 104: Kraftsensor
- 106: Kupplungseinrichtung
- 108: Verdrängungselement
- A: Distanzunterseite von 28 - 24
- B: Distanz 26 - 24
- E: Erdreich
- G: Startgrube
- H: Erdanhäufung
- T: Trommel
- S: Startpunkt

## Patentansprüche

1. Verfahren zum Verlegen von Leitungen (22) im Erdreich (E), mit den Schritten:
- Erzeugen eines Verlegeschlitzes (38) im Erdreich (E) zur Aufnahme einer zu verlegenden Leitung (22) mit einem Pflugschwert (16); und
- Einbringen der Leitung (22) in den Verlegeschlitz (38) mittels eines in den Verlegeschlitz (38) hineinragenden Einführelements (18);
**dadurch gekennzeichnet , dass**
zusammen mit dem Einbringen der Leitung (22) in den Verlegeschlitz (38) eine Schutzlage (102) derart in das Erdreich (E) eingebracht wird, dass sie oberhalb der Leitung (22) zu liegen kommt und zwar vorzugsweise ca. 25 bis 35 cm und besonders bevorzugt ca. 30 cm oberhalb der Leitung (22).

2. Verfahren nach Anspruch 1,
**dadurch gekennzeichnet , dass**
die Schutzlage (102) beginnend von einem Startpunkt (S) aus hinter dem Einführelement (18) hinterher in das Erdreich (E) ein- und durch dasselbe hindurch gezogen wird, wobei dies vorzugsweise im Torpedo- oder Raketenpflugverfahren erfolgt.

3. Verfahren nach Anspruch 1 oder 2,
**dadurch gekennzeichnet , dass**
die Schutzlage (102) zumindest mittelbar mit dem in den Verlegeschlitz (38) hineinragenden Einführelement (18) gekoppelt und von diesem mit fortschreitender Leitungsverlegung im Erdreich (E) hinterhergezogen wird.

4. Verfahren nach zumindest einem der voranstehenden Ansprüche,
**dadurch gekennzeichnet , dass**
die Schutzlage (102) während der Leitungsverlegung dadurch von einer Trommel (T), auf der die Schutzlage (102) aufgewickelt ist, abgewickelt wird, dass das Einführelement (18) zunehmend von der Trommel (T) wegbewegt wird.

5. Verfahren nach zumindest einem der voranstehenden Ansprüche,
**gekennzeichnet, durch** den Schritt:
- Ermitteln der Zugkräfte, die in der Schutzlage (102) infolge des Einbringens derselben in das Erdreich (E) herrschen, während des Einbringens der Schutzlage (102) in das Erdreich und zwar vorzugsweise mittels eines Kraftsensors (104), über den die Schutzlage (102) mit dem Einführelement (18) gekoppelt ist.

6. Verfahren nach zumindest einem der voranstehenden Ansprüche,
**gekennzeichnet, durch** den Schritt:
- Ermitteln von Leitungspositionsdaten entlang der eingebrachten Leitung (22) während des Einbringens der Leitung (22) in den Verlegeschlitz (38) vorzugsweise **durch** wiederholtes Vermessen eines sich mit dem Einführelement (18) mitbewegenden, für die Verlegetiefe der Leitung (22) repräsentativen Punktes (24), welcher in vertikaler Richtung einen definierbaren, konstanten Sollabstand (A) zu einer auf der Sohle (40) des Verlegeschlitzes (38) aufstehenden Unterseite des Einführelements (18) aufweist.

7. Verfahren nach Anspruch 6,
**dadurch gekennzeichnet, dass**
zur Ermittlung der Leitungspositionsdaten die Position des sich mit dem Einführelement (18) mitbewegenden, für die Verlegetiefe der Leitung (22) repräsentativen Punktes durch GPS-Vermessung, insbesondere unter Verwendung eines GPS-Verarbeitungsmoduls bestimmt wird, das mit einer GPS-Antenne (24) gekoppelt ist, die an dem für die Verlegetiefe der Leitung (22) repräsentativen Punkt (24) angeordnet wurde.

8. Verfahren nach zumindest einem der Ansprüche 5 bis 7,
**gekennzeichnet, durch** den Schritt:
- Abspeichern der ermittelten Zugkräfte in Abhängigkeit der ermittelten Leitungskoordinaten und/oder der Lagekoordinaten der Leitungssolltrasse in einer Protokolldatei.

9. Verfahren nach zumindest einem der Ansprüche 5 bis 8,
**gekennzeichnet, durch** den Schritt:
- Visualisieren der ermittelten Zugkräfte und/oder der ermittelten Leitungskoordinaten und gegebenenfalls weiterer mit dem Verlegevorgang in Beziehung stehender Sachinformationen in Abhängigkeit von den Lagekoordinaten der Leitungssolltrasse.

10. System zum Verlegen von Leitungen (22) im Erdreich (E), umfassend:
- einen Verlegepflug mit einem Pflugschwert (16) zum Erzeugen eines Verlegeschlitzes (38) im Erdreich (E) zur Aufnahme der zu verlegenden Leitung (22); und
- ein mit dem Pflugschwert (16) gekoppeltes Einführelement (18), durch das die Leitung (22) in den mit Hilfe des Pflugschwerts (16) erzeugten Verlegeschlitzes (38) einbringbar ist;
**gekennzeichnet durch**
- eine Koppelvorrichtung (100), die an dem Einführelement (18) anbringbar oder angebracht ist und ausgebildet ist, um darüber eine oberhalb der Leitung (22) im Erdreich (E) zu liegen kommende Schutzlage (102) mit dem Einführelement (18) zu koppeln.

11. System nach Anspruch 10,
**dadurch gekennzeichnet , dass**
die Koppelvorrichtung (100) einen Kraftsensor (104) enthält, welcher eingerichtet ist, um die Zugkräfte während des Einbringens der Schutzlage (102) in das Erdreich (E) zu ermitteln, die in der Schutzlage (102) infolge des Einbringens derselben in das Erdreich herrschen.

12. System nach Anspruch 10 und/oder 11,
**dadurch gekennzeichnet , dass**
die Koppelvorrichtung (100) ein Verdrängungselement (108) aufweist, das in Verlegerichtung das Erdreich vor der Schutzlage (102) verdrängt.

13. System nach zumindest einem der Ansprüche 10 bis 12,
**dadurch gekennzeichnet , dass**
die Koppelvorrichtung (100) eine Kupplungseinrichtung (106) aufweist, mittels derer die Schutzlage (102) lösbar an der Kopplungsvorrichtung (100) anbringbar ist.

14. System nach Anspruch 11 oder 12, ferner umfassend:
- eine Speichereinrichtung, welche eingerichtet ist, um die ermittelten Zugkräfte in Abhängigkeit von Lagekoordinaten der Leitungssolltrasse abzuspeichern.

15. System nach zumindest einem der Ansprüche 10 bis 14,
**dadurch gekennzeichnet , dass**
die Schutzlage (102) auf einer Trommel (T) aufgewickelt ist, von der die Schutzlage (102) während der Leitungsverlegung dadurch abwickelbar ist, dass das Einführelement (18) zunehmend von der Trommel (T) wegbewegt wird.
